Europäisches Patentamt

European Patent Office

Office européen des brevets

(11) Numéro de publication: **0 419 356 B1**

# FASCICULE DE BREVET EUROPEEN

(45) Date de publication du fascicule du brevet: **15.11.95**

(51) Int. Cl.⁶: **B01D 53/38**, B01D 53/96, B01J 23/86

(21) Numéro de dépôt: **90402591.3**

(22) Date de dépôt: **20.09.90**

(54) **Procédé d'élimination d'hydrures gazeux sur support solide constitué d'oxydes métalliques.**

(30) Priorité: **22.09.89 FR 8912448**

(43) Date de publication de la demande:
**27.03.91 Bulletin 91/13**

(45) Mention de la délivrance du brevet:
**15.11.95 Bulletin 95/46**

(84) Etats contractants désignés:
**DE FR GB IT**

(56) Documents cités:
**EP-A- 0 060 742**
**EP-A- 0 194 366**
**FR-A- 2 063 216**
**GB-A- 2 114 911**

(73) Titulaire: **L'AIR LIQUIDE, SOCIETE ANONYME POUR L'ETUDE ET L'EXPLOITATION DES PROCEDES GEORGES CLAUDE**
**75, Ouai d'Orsay**
**F-75321 Paris Cédex 07 (FR)**

(72) Inventeur: **Delobel, Olivier**
**12, rue Fulton**
**F-75013 Paris (FR)**
Inventeur: **Louise, Jean**
**22, allée des Plantes**
**F-94800 Villejuif (FR)**
Inventeur: **Cornut, Philippe**
**38, rue de la République**
**F-38130 Echirolles (FR)**

(74) Mandataire: **Le Moenner, Gabriel et al**
**L'AIR LIOUIDE, Société Anonyme**
**pour l'étude et l'exploitation des procédés**
**Georges Claude**
**75, Ouai d'Orsay**
**F-75321 Paris Cédex 07 (FR)**

## Description

La présente invention concerne un procédé d'élimination d'hydrures gazeux sur un support solide à base d'oxydes métalliques.

Les hydrures gazeux tels que les silanes, l'arsine, la phosphine, le diborane, le germane, le stannane, le gallane, la stibine, l'hydrogène telluré, l'hydrogène sélénié, l'hydrogène sulfuré sont des composés largement employés dans l'industrie des semi-conducteurs et dans les industries connexes telles que fibres optiques, matériaux nouveaux etc. Dans ce type d'industrie, les réactions chimiques au sein des réacteurs de fabrication ne sont jamais totales et on retrouve à la sortie des systèmes de pompage ainsi que lors des purges des lignes de mise en oeuvre, des quantités parfois non négligeables de ces gaz.

En raison du caractère fortement toxique et inflammable de ces gaz, il apparaît indispensable de prévoir des dispositifs de traitement de haute efficacité qui permettent d'obtenir des gaz de rejet dans lesquels les hydrures ne dépassent pas les concentrations minimales admises qui sont par exemple de 0,05 ppm pour l'arsine, 0,3 ppm pour la phosphine, 5 ppm pour le silane et 0,1 ppm pour le diborane.

La demande EP-A-0 121 339 décrit un procédé d'élimination des hydrures suivants: arsine, diborane, stibine et hydrogène sélénié qui consiste à mettre en contact le gaz les contenant avec un support constitué de charbon actif sur lequel sont déposés moins de 1% d'un mélange d'oxyde de cuivre et d'au moins un composé choisi parmi les dérivés des métaux alcalins, alcalino-terreux, Al, V, Cr, Mn, Fe, Co, Ni, Zn, Cd et Pb.

Parmi les techniques industrielles existantes, la destruction des hydrures gazeux sur des réactifs solides a déjà permis d'obtenir des résultats intéressants. Néanmoins, il s'avère nécessaire de trouver des phases solides plus fiables et plus performantes du point de vue durée de vie.

La demande de brevet EP-A-0 194 366 décrit un procédé pour épurer un gaz contenant les hydrures suivants: arsine, phosphine, diborane et hydrogène sélénié. Ce procédé consiste à mettre en contact le gaz à épurer avec un support solide comprenant un oxyde de cuivre.

La demanderesse a découvert que d'autres supports solides, disponibles dans le commerce, pouvaient permettre de traiter avec une très grande efficacité les gaz hydrures rejetés par l'industrie des semi-conducteurs et les industries connexes.

Ces supports solides sont constitués essentiellement d'oxydes métalliques contenant au moins du cuivre et du chrome et possédant une surface spécifique inférieure ou égale à 100 m$^2$/g.

La présente invention a donc pour objet un procédé d'élimination d'hydrures gazeux choisis parmi le silane SiH$_4$, l'arsine AsH$_3$, la phosphine PH$_3$, le diborane B$_2$H6, le germane, le stannane SnH$_4$, le gallane GaH$_3$, la stibine SbH$_3$, l'hydrogène telluré TeH$_2$, l'hydrogène sélénié SeH$_2$ et l'hydrogène sulfuré H$_2$S consistant à faire circuler le flux gazeux contenant ces hydrures dilués dans un gaz inerte sur un support solide constitué essentiellement d'oxydes métalliques comprenant au moins du cuivre et du chrome et ayant une surface spécifique inférieure ou égale à 100 m$^2$/g, ledit procédé étant réalisé dans une installation dont la température est controllée.

La réaction s'effectue à température ambiante, mais étant donné qu'elle est fortement exothermique, il est nécessaire de contrôler la température de l'installation, soit par un refroidissement extérieur, soit en augmentant le gaz inerte de dilution. On utilise une pression voisine de la pression atmosphérique.

Le support solide se présente sous forme de granulés prêts à l'emploi. Un simple inertage à l'azote suffit avant son utilisation.

Ce support solide présente le grand avantage de pouvoir être régénéré après saturation. Cette régénération, qui peut aussi être faite avant la saturation complète, s'effectue par passage dans l'installation d'un courant gazeux contenant une teneur en oxygène parfaitement contrôlée dans l'azote, cette teneur en oxygène étant de 1 à 5% en volume et de préférence de 1 à 2% en volume.

Le courant gazeux de régénération assure la réoxydation des éléments métalliques préalablement réduits par le passage et la destruction des hydrures.

Cette oxydation étant elle aussi fortement exothermique, il convient de contrôler l'évolution de la température avec précision.

Le cycle de régénération peut être renouvelé plusieurs fois.

Selon un mode de réalisation préféré du procédé de l'invention, le support solide contient outre du cuivre et du chrome, également du manganèse.

Selon un mode de réalisation particulièrement préféré du procédé selon l'invention, le support solide utilisé pour l'élimination des hydrures gazeux contient également du baryum qui consolide le support, augmente sa durée de vie et favorise la diffusion des gaz vers les sites actifs du support solide.

Le support solide utilisé dans le procédé selon l'invention a de préférence la composition suivante :

- Cu 25 à 70% en poids

2

- Cr 15 à 40% en poids
- Ba 0 à 15% en poids
- Mn 0 à 5% en poids, le complément étant de l'oxygène.

Le gaz inerte utilisé pour la dilution des hydrures gazeux est de préférence de l'azote.

La concentration volumique des hydrures dans le flux gazeux hydrure - gaz inerte de dilution est de 0,1 à 10% en volume, et de préférence 1 à 5% en volume.

Le procédé selon l'invention est mis en oeuvre avec des débits gazeux que l'homme de métier saura adapter en fonction du temps de séjour du flux gazeux dans le support solide, et afin d'obtenir un régime turbulent.

La présente invention a également pour objet l'application du procédé décrit ci-dessus à l'industrie des semi-conducteurs.

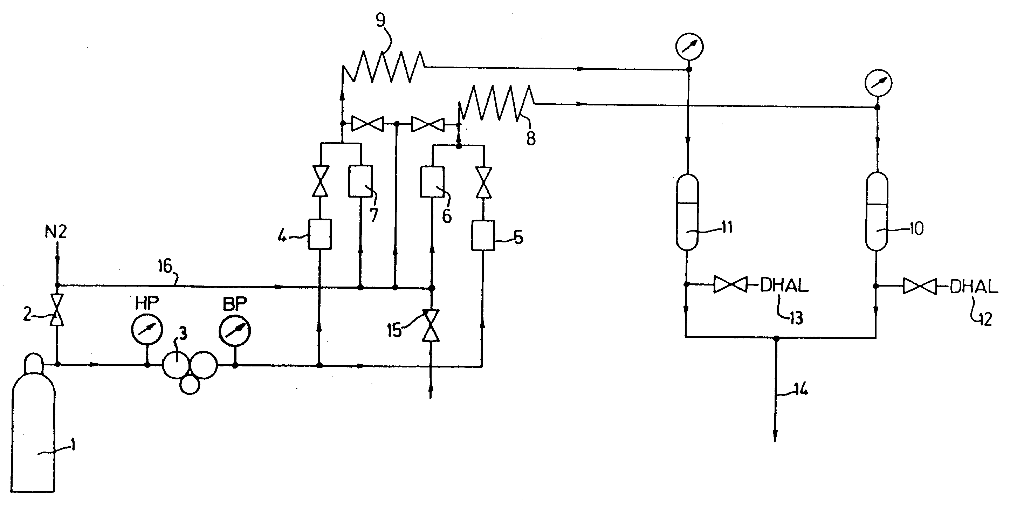

L'invention sera mieux comprise à l'étude de la description détaillée d'un mode de réalisation préféré de l'invention pris à titre d'exemple nullement limitatif et illustré par la figure unique du dessin annexé représentant une installation pouvant être utilisée pour la mise en oeuvre du procédé de l'invention.

Le flux d'hydrure gazeux est introduit dans l'installation à partir du récipient sous pression 1, en même temps que l'azote de dilution qui est introduit par la vanne 2. Ce mélange gazeux passe dans un détendeur 3, puis dans des régulateurs de débit massique 4 et/ou 5, dans des homogénéiseurs 8 et/ou 9, pour parvenir dans des cartouches 10 et/ou 11, qui sont ici en verre, et qui contiennent le support solide à base d'oxydes métalliques. Des détecteurs d'hydrures (DHAL) 12 et 13 sont placés à la sortie des cartouches contenant le support solide et prélèvent une partie du flux gazeux traité afin de contrôler la destruction des hydrures qui y étaient contenus. Le ou les flux gazeux sont ensuite dirigés en 14 vers une capacité contenant un catalyseur de type Hopcalite avant d'être renvoyés à l'air libre.

Des régulateurs de débit massique 6 et 7 sont également prévus pour contrôler le débit de gaz de régénération admis en 15.

De l'azote servant de gaz de purge peut également être admis en 16 dans le but de purger l'installation en fin de cycle.

Les régulateurs de débit massique 4 et 5 d'une part et 6 et 7 d'autre part, les homogénéiseurs 8 et 9 ainsi que les cartouches de support solide 10 et 11 et les détecteurs d'hydrures 12 et 13 peuvent fonctionner en parallèle ou alternativement, les supports solides se trouvant en 10 et 11 pouvant être identiques ou différents.

Le procédé de l'invention sera mieux illustré par les exemples de réalisation suivants qui sont uniquement illustratifs et non limitatifs de la portée de l'invention.

EXEMPLE 1

On fait passer un flux gazeux ayant une teneur en phosphine de 5% en volume dans l'azote, avec un débit total de 50 l/h sur un support solide ou catalyseur contenant 42% en poids de cuivre et 26,5% en poids de chrome, le complément étant de l'oxygène, ayant une surface spécifique de 40 $m^2/g$ et une densité apparente de 1,8. La température maximale mesurée est de 120°C.

Le taux de destruction de la phosphine est de 75 litres de phosphine par litre de support solide après deux cycles de destruction et deux cycles de régénération.

Afin d'éviter un échauffement trop violent de la capacité contenant le support solide, on utilise pour la régénération du support solide les conditions opératoires suivantes :
- débit total : 50 l/h
- teneur $O_2$ : 2% en volume
- température maximale mesurée : 120°C.

Les différents paramètres opératoires et les résultats obtenus sont consignés dans le tableau 1 suivant.

TABLEAU 1

Catalyseur 1 — Masse 1031 g — Volume 560 cm³

| | 1ère Destruction | 1ère Régénération | 2ème Destruction | 2ème Régénération |
|---|---|---|---|---|
| Débit total l/h | 50 | 50 | 50 | 50 |
| Concentration en Ph3 | 5% | 2% | 5% | 2% |
| Concentration en 02 | | 5% | | 5% |
| Temp maxi interne °C | 92 | 43 | 37 | 39 |
| Temp maxi paroi °C | 51 | 25 | | 48 |
| Volume PH3 détruit l | 39 | | | |
| Volume 02 en l | | 15 | 2,5 | 9,8 |
| Rendement l PH3/l catalyseur | 70 | | 75 | |
| Vol. total 02 l/l catalyseur | | 27 | | 45 |

EXEMPLE 2

On procède de la même manière que dans l'exemple 1, mais en utilisant un support solide constitué de 33% en poids de cuivre, 27,5% en poids de chrome et 11,5% en poids de baryum, le complément étant de l'oxygène, ayant une surface spécifique de 30 m²/g et une densité apparente de 1,8.

Le taux de destruction de phosphine est de 79 1/1 de support solide après deux cycles de destruction et deux cycles de régénération.

Le procédé de régénération du support solide est identique à celui de l'exemple 1.

4

Les paramètres opératoires et résultats sont consignés dans le tableau 2 suivant.

TABLEAU 2

Catalyseur 2    Masse 1045 g    Volume 650 $cm^3$

| | 1ère Destruction | 1ère Régénération | 2ème Destruction | 2ème Régénération |
|---|---|---|---|---|
| Débit total l/h | 50 | 50 | 50 | 50 |
| Concentration en Ph3 | 5% | 2% | 5% | 2% |
| Concentration en 02 | | 5% | | 5% |
| Temp maxi interne °C | 103 | 25 | 65 | 26 |
| Temp maxi paroi °C | 58 | 22 | 47 | 26 |
| Volume PH3 détruit l | 44 | | 7,5 | |
| Volume 02 en l | | 15 | | 9,8 |
| Rendement l PH3/l catalyseur | 67 | | 79 | |
| Vol. total 02 l/l catalyseur | | 24 | | 39 |

EXEMPLE 3

On procède de la même manière que dans les exemples précédents, mais en utilisant un catalyseur contenant 35% en poids de cuivre, 31% en poids de chrome, 2% en poids de baryum et 2,5% en poids de manganèse le complément étant de l'oxygène, ayant une surface spécifique de 30 $m^2/g$ et une densité apparente de 1,8.

Le taux de destruction de phosphine est de 95 l/l de support solide après 3 cycles de destruction et 3 cycles de régénération..

Le procédé de régénération du support solide est identique à celui de l'exemple 1.

Les paramètres opératoires et résultats obtenus sont consignés dans le tableau 3 suivant.

## TABLEAU 3

### Catalyseur 3    Masse 1014 g    Volume 530 cm$^3$

| | 1ère Destruction | 1ère Régénération | 2ème Destruction | 2ème Régénération | 3ème Destruction | 3ème Régénération |
|---|---|---|---|---|---|---|
| Débit total l/h | 50 | 50 | 50 | 50 | 50 | 50 |
| Concentration en PH3 | 5% | | 5% | | 5% | |
| Concentration en 02 | | 2% | | 2% | | 4% |
| Temp maxi interne °C | 109 | 100 | 67 | 43 | 36 | 98 |
| Volume PH3 détruit l | 39,2 | | 8,7 | | 2,3 | |
| Volume 02 en l | | 20 | | 25 | | 19 |
| Rendement l PH3/l catalyseur | 74 | | 90,5 | | 94,8 | |
| Vol. total 02 l/l catalyseur | | 38 | | 83 | | 120 |

6

EXEMPLE 4

On fait passer un flux gazeux contenant 2,5% en volume d'arsine $AsH_3$ dans l'azote, avec un débit de 120 l/h, sur un support solide contenant 35% en poids de cuivre, 31% en poids de chrome, 2% en poids de baryum et 2,5% en poids de manganèse, le complément étant de l'oxygène, ayant une surface spécifique de 30 $m^2$/g et une densité apparente de 1,8.

On utilise une cartouche de diamètre 80 mm contenant 1252 g de support solide ayant un volume de 700 $cm^3$.

Le rendement de destruction de l'arsine est de 70 l/l de support solide.

Le procédé de régénération du support solide est le même que précédemment.

## Revendications

1. Procédé d'élimination d'hydrures gazeux choisis parmi le silane, l'arsine, la phosphine, le diborane, le germane, le stannane, le gallane, la stibine, l'hydrogène telluré, l'hydrogène sélénié et l'hydrogène sulfuré sur un support solide constitué essentiellement d'oxydes métalliques, caractérisé par le fait qu'il consiste à faire circuler un flux gazeux contenant les hydrures dilués dans un gaz inerte, sur un support solide comprenant au moins du cuivre et du chrome et ayant une surface spécifique inférieure ou égale à 100 $m^2$/g, ledit procédé étant réalisé dans une installation dont la température est contrôlée.

2. Procédé selon la revendication 1, caractérisé par le fait que le support solide comprend également du manganèse.

3. Procédé selon la revendication 1 ou 2, caractérisé par le fait que le support solide contient en outre du baryum.

4. Procédé salon l'une quelconque des revendications 1 à 3, caractérisé par le fait que le support solide a la composition suivante :
   - Cu : 25 à 70 % en poids,
   - Cr : 15 à 40 % en poids,
   - Ba : 0 à 15 % en poids,
   - Mn : 0 à 5 % en poids, le complément étant de l'oxygène.

5. Procédé selon l'une quelconque des revendications 1 à 4, caractérisé par le fait que les gaz hydrures sont dilués dans l'azote gazeux.

6. Procédé selon l'une quelconque des revendications 1 à 5, caractérisé par le fait que la concentration volumique des hydrures dans le flux gazeux hydrure-gaz inerte de dilution est compris entre 0,1 et 10 % en volume, et de préférence 1 à 5 % en volume.

7. Procédé selon l'une quelconque des revendications 1 à 6, caractérisé par le fait que le support solide est soumis à un ou plusieurs cycles de régénération.

8. Procédé selon la revendication 7, caractérisé par le fait que la régénération est effectuée par passage d'un courant gazeux contenant 1 à 5% en volume d'oxygène, et de préférence 1 à 2% en volume.

9. Application du procédé selon l'une quelconque des revendications 1 à 8 à l'industrie des semi-conducteurs.

## Claims

1. Process for eliminating gaseous hydrides, chosen from amongst silane, arsine, phosphine, diborane, germane, stannane, gallane, stibine, hydrogen telluride, hydrogen sellenide and hydrogen sulphide, on a solid support consisting essentially of metallic oxides, characterized by the fact that it consists of circulating a gaseous flow containing the hydrides diluted in an inert gas, over a solid support comprising at least copper and chromium and having a specific surface area less than or equal to 100 $m^2$/g, the said process being carried out in an installation whose temperature is controlled.

2. Process according to Claim 1, characterised by the fact that the solid support also comprises manganese.

3. Process according to Claim 1 or 2, characterised by the fact that the solid support also contains barium.

4. Process according to any one of Claims 1 to 3, characterised by the fact that the solid support has the following composition:
   - Cu: 25 to 70% by weight
   - Cr: 15 to 40% by weight
   - Ba: 0 to 15% by weight
   - Mn: 0 to 5% by weight
   the remainder being oxygen.

5. Process according to any one of Claims 1 to 4, characterized by the fact that the hydride gases are diluted in gaseous nitrogen.

6. Process according to any one of Claims 1 to 5, characterised by the fact that the concentration by volume of the hydrides in the gaseous flow consisting of hydride and inert dilution gas lies between 0.1 and 10% by volume and preferably 1 to 5% by volume.

7. Process according to any one of Claims 1 to 6, characterised by the fact that the solid support is subjected to one or more regeneration cycles.

8. Process according to Claim 7, characterised by the fact that the regeneration is effected by the passage of a gaseous flow containing 1 to 5% by volume of oxygen, and preferably 1 to 2% by volume.

9. Application of the process according to any one of Claims 1 to 8 to the semiconductor industry.

**Patentansprüche**

1. Verfahren zur Entfernung gasförmiger Hydride, die aus der Gruppe Silan, Arsin, Phosphin, Diboran, German, Stannan, Gallan, Stibin, Tellurwasserstoff, Selenwasserstoff und Schwefelwasserstoff ausgewählt werden, auf einem festen Träger, der im wesentlichen aus Metalloxid besteht, dadurch gekennzeichnet, daß es darin besteht, einen Gasstrom, der die Hydride in einem inerten Gas verdünnt enthält, über einen festen Träger zu leiten, der zumindest Kupfer und Chrom enthält und eine spezifische Oberfläche von weniger als oder gleich 100 $m^2/g$ hat, wobei das Verfahren in einer Anlage durchgeführt wird, deren Temperatur kontrolliert wird.

2. Verfahren nach Anspruch 1, dadurch gekennzeichnet, daß der feste Träger außerdem Mangan aufweist.

3. Verfahren nach Anspruch 1 oder 2, dadurch gekennzeichnet, daß der feste Träger darüber hinaus Barium enthält.

4. Verfahren nach einem der Ansprüche 1 bis 3, dadurch gekennzeichnet, daß der feste Träger die folgende Zusammensetzung hat:
   - Cu: 25 bis 70 Gew.%,
   - Cr: 15 bis 40 Gew.%,
   - Ba: 0 bis 15 Gew.%,
   - Mn: 0 bis 5 Gew.%, wobei das Komplement Sauerstoff ist.

5. Verfahren nach einem der Ansprüche 1 bis 4, dadurch gekennzeichnet, daß die Hydridgase in gasförmigem Stickstoff verdünnt sind.

6. Verfahren nach einem der Ansprüche 1 bis 5, dadurch gekennzeichnet, daß die Volumenkonzentration der Hydride in dem Gasstrom aus Hydrid und inertem Verdünnungsgas zwischen 0,1 und 10 Vol.% und vorzugsweise 1 bis 5 Vol.% liegt.

7. Verfahren nach einem der Ansprüche 1 bis 6, dadurch gekennzeichnet, daß der feste Träger einem oder mehreren Regenerationszyklen unterworfen wird.

8. Verfahren nach Anspruch 7, dadurch gekennzeichnet, daß die Regenerierung durchgerührt wird, indem man einen Gasstrom vorbeileitet, der 1 bis 5 Vol.% und vorzugsweise 1 bis 2 Vol.% Sauerstoff enthält.

9. Verwendung des Verfahrens nach einem der Ansprüche 1 bis 8 in der Halbleiterindustrie.